# EUROPEAN PATENT APPLICATION

(11) **EP 4 074 737 A1**
(43) Date of publication of application: **19.10.2022**
(21) Application number: 20898156.3
(22) Date of filing: 11.12.2020
(51) Int. Cl.: C08F 212/06, C08F 232/08, C08F 2/06

(54) **METHOD FOR PRODUCING COPOLYMER RESIN OF DICYCLOPENTADIENE AND VINYL AROMATIC COMPOUND**

(30) Priority: 13.12.2019 JP 2019225762
(71) Applicant: Maruzen Petrochemical Co., Ltd., Tokyo 104-8502 (JP)
(72) Inventor: SAWADA Goro, Ichihara-shi, Chiba 290-8503 (JP); IIJIMA Yoshikazu, Ichihara-shi, Chiba 290-8503 (JP); IWAMURA Kyohei, Ichihara-shi, Chiba 290-8503 (JP); KAWATE Takahiro, Ichihara-shi, Chiba 290-8503 (JP); KAGA Shinnosuke, Ichihara-shi, Chiba 290-8503 (JP)
(74) Representative: Regimbeau
(86) International application number: PCT/JP2020/046223
(87) International publication number: WO 2021/117854

(57) **Abstract**

An object of the present invention is to provide a method of manufacturing a copolymer resin of dicyclopentadiene and a vinyl aromatic compound, by which the resin can be continuously manufactured with reduced generation of high molecular weight products of the vinyl aromatic compound and insoluble substances from dicyclopentadiene, and at high yield.

[Means to Solve the Problem]

It has been found that introduction of a raw material injection step in the manufacturing method of the present invention, the step including continuously injecting polymerization raw materials into a preheated solvent in the reaction system, and concurrently ejecting a part of the reaction solution containing the solvent and the polymerization raw materials outside the reaction system, while raising the temperature of the polymerization raw materials, enables rapid rise of the temperature of the polymerization raw materials by utilizing sensible heat, resulting in reduced generation of insoluble substances. In addition, providing a reaction step following the raw material injection step allows the polymerization reaction to proceed until a desired molecular weight is achieved, resulting in improved yield.

## Description

### BACKGROUND OF THE INVENTION

### Field of the Invention

The present invention relates to methods of manufacturing a copolymer resin by thermal polymerization of dicyclopentadiene and a vinyl aromatic compound.

### Background Art

Hot melt adhesives are widely used in the bookbinding, packaging, can manufacturing, sewing, hygiene materials, and other fields because of their fast adhesion, non-solvent and non-toxic properties, and excellent weather resistance, heat resistance, and economy. In general, the components of hot melt adhesives are broadly divided into base polymers, tackifier resins, plasticizers, fillers, antioxidants, and other agents. Among them, tackifier resins are known to greatly contribute to the performance of hot melt adhesives.

Tackifier resins, when melted and applied, impart wettability and hot tack properties, and improve the adhesiveness to the surface of the adherend. In addition, tackifier resins are often blended as components of hot melt adhesives because of their characteristics such as improving the workability by controlling the melt viscosity when hot melted, and adjusting the heat resistance during hot melting. Resins used as tackifier resins are divided broadly into rosin and rosin derivatives, terpene resins, and petroleum resins. Recently, petroleum resins that have excellent compatibility, heat resistance, safety, cost, and other properties are often used due to demand for use in hygienic goods such as disposable diapers. Petroleum resins that are often used include aliphatic petroleum resins, aromatic petroleum resins, and dicyclopentadiene petroleum resins.

Of the petroleum resins described above, copolymer resins of dicyclopentadiene and a vinyl aromatic compound have an excellent balance between the performance and cost. In general, a copolymer resin of dicyclopentadiene and a vinyl aromatic compound is obtained by a thermal polymerization reaction. As a vinyl aromatic compound that can undergo thermal polymerization reaction, styrene is suitably used from the viewpoint of the hue and tacky producing properties of the obtained resin. However, high molecular weight products formed by polymerization of styrene alone are produced under conditions using a large amount of styrene or low temperature conditions under which copolymerization with dicyclopentadiene does not proceed, which are problematic when the resin is used as a tackifier.

Dicyclopentadiene favors short-time thermal polymerization reaction. When the reaction is long lasting, an insoluble substance (wax) derived from dicyclopentadiene is produced, which may clog filters in the manufacturing process and cause problems when the resin is used as a tackifier.

Thermal polymerization reactions between dicyclopentadiene and a vinyl aromatic compound are generally performed in a batch manner (Patent Literature 1 and 2). Typically, a solvent is heated to a reaction temperature, and a mixture of dicyclopentadiene and a vinyl aromatic compound is added to the solvent and allowed to be polymerized to obtain a copolymer resin with an aromatic compound partially introduced (dropwise polymerization method).

### Citation List

### Patent Literature

Patent Literature 1: JP H11-130820 A
Patent Literature 2: JP 2004-515618 A

### SUMMARY OF THE INVENTION

### Technical Problem

Although batch-type polymerization has advantages in terms of controlling the reaction temperature and increasing the yield, it may unfortunately result in increased equipment size in mass production and complicated operations in each step. On the other hand, continuous polymerization can provide reduced equipment size and simplified operations in each step.

Common methods of continuously manufacturing resins include those using plug flow reactors (PFR), continuous stirred tank reactors (CSTR), and other reactors. However, continuous reaction in a PFR passes through a state with a low reaction temperature during heating of the polymerization raw materials, so that high molecular weight products from a vinyl aromatic compound and an insoluble substance from dicyclopentadiene are produced. CSTR makes the distribution of the residence time of the polymerization raw materials broad, so that the produced resin also has broad molecular weight distribution, especially with low molecular weight products produced in high amounts, which cause decrease in the yield.

The present invention provides a method of manufacturing a copolymer resin of dicyclopentadiene and a vinyl aromatic compound, by which the resin can be continuously manufactured in a thermal polymerization reaction between dicyclopentadiene and the vinyl aromatic compound with reduced generation of high molecular weight products of the vinyl aromatic compound and insoluble substances from dicyclopentadiene (wax), and at high yield.

### Solution to Problem

In order to solve the above problems, the present inventors have intensively studied to find that a raw material injection step comprising continuously injecting dicyclopentadiene and a vinyl aromatic compound as polymerization raw materials into a preheated solvent in the reaction system, and concurrently ejecting a part of the reaction solution containing the solvent and the polymerization raw materials outside the reaction system, while raising the temperature of the polymerization raw materials, can be performed to enable rapid rise of the temperature of the polymerization raw materials by utilizing sensible heat, resulting in reduced generation of high molecular weight products of the vinyl aromatic compound and insoluble substances from dicyclopentadiene. In addition, the present inventors have found that providing a reaction step following the raw material injection step allows the polymerization reaction to proceed until a desired molecular weight is achieved, resulting in improved yield, thereby completing the present invention.

Accordingly, the present invention provides the following <1> to <8>:
<1> A method of manufacturing a copolymer resin by thermal polymerization of dicyclopentadiene and a vinyl aromatic compound,
   wherein the vinyl aromatic compound is a compound represented by the following formula (1): 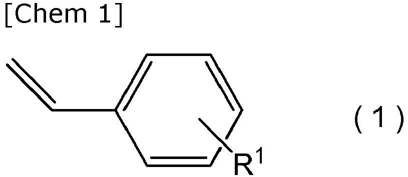
   wherein R¹ is a hydrogen atom, an alkyl group, a cycloalkyl group, an aryl group, or an aralkyl group;
   the method comprising the following steps (A) and (B):
      (A) a raw material injection step comprising continuously injecting the dicyclopentadiene and the vinyl aromatic compound represented by the above formula (1) as polymerization raw materials into a preheated solvent in the reaction system, and concurrently ejecting a part of the reaction solution containing the solvent and the polymerization raw materials outside the reaction system, while raising the temperature of the polymerization raw materials; and
      (B) a reaction step comprising heating the polymerization raw materials at a temperature ranging from 240°C to 280°C in the reaction system after the raw material injection step to proceed the polymerization reaction and obtain a polymerization reaction product.
<2> The manufacturing method according to <1>, wherein the average residence time of the polymerization raw materials in the step (A) is from 5 minutes to 120 minutes.
<3> The manufacturing method according to <1> or <2>, wherein the preheating temperature of the solvent in the step (A) is in a range from 180°C to 280°C.
<4> The manufacturing method according to any one of <1> to <3>, wherein the total concentration of reactive components in the step (B), comprising the vinyl aromatic compound and the dicyclopentadiene as polymerization raw materials, and a polymerization product from the vinyl aromatic compound and the dicyclopentadiene, based on the entire reaction solution comprising the reactive components and the solvent, is in a range from 35 mass% to 60 mass%.
<5> The manufacturing method according to any one of <1> to <4>, wherein the Z-average molecular weight of the polymerization reaction product obtained in the step (B) is from 1000 to 4000.
<6> The manufacturing method according to any one of <1> to <5>, wherein the polymerization solvent is an aromatic hydrocarbon compound.
<7> The manufacturing method according to any one of <1> to <6>, further comprising (C) a work-up step of purifying the polymerization reaction product after the reaction step.
<8> The manufacturing method according to <7>, wherein the Z-average molecular weight of the copolymer resin obtained in the step (C) is from 1000 to 3000.

### Advantageous Effects of Invention

The manufacturing method of the present invention is a method of thermal polymerization of dicyclopentadiene and a vinyl aromatic compound, by which a copolymer resin can be continuously manufactured with reduced generation of high molecular weight products of the vinyl aromatic compound and insoluble substances from dicyclopentadiene, and at high yield.

### DETAILED DESCRIPTION OF THE INVENTION

### <Method of Manufacturing Copolymer Resin>

The method of manufacturing a copolymer resin of dicyclopentadiene and a vinyl aromatic compound of the present invention comprises at least the steps (A) and (B) as described below, and may further comprise the step (C). The steps will be described below.

### <Step (A)>

The step (A) is a step for injection of raw materials. The raw material injection step is a step of continuously injecting polymerization raw materials into a preheated solvent in the reaction system, and concurrently ejecting a part of the reaction solution containing the solvent and the polymerization raw materials outside the reaction system, while raising the temperature of the polymerization raw materials.

Specifically, continuous injection of a mixed solution containing dicyclopentadiene, a vinyl aromatic compound, and a solvent into a polymerization solvent heated to a preheating temperature enables rapid rise of the temperature of the polymerization raw materials by utilizing the sensible heat. Concurrently, continuous ejection of a part of the reaction solution containing the solvent and the polymerization raw materials outside the reaction system so that the residence time of the polymerization raw materials in the system is adjusted can narrow the molecular weight distribution of the resin. Preferably, the concentrations of dicyclopentadiene and a vinyl aromatic compound as polymerization raw materials are adjusted in the mixed solution to be injected.

The vinyl aromatic compound used in the raw material injection step is a compound represented by the following formula (1): 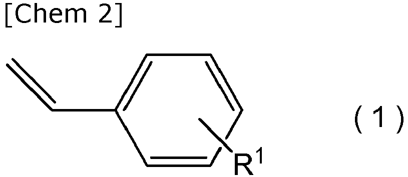 wherein R¹ is a hydrogen atom, an alkyl group, a cycloalkyl group, an aryl group, or an aralkyl group.

The alkyl group represented as R¹ preferably is a C₁₋₁₀ alkyl group, and more preferably a C₁₋₇ alkyl group. The alkyl group may also be linear or branched, e.g., including methyl, ethyl, n-propyl, isopropyl, n-butyl, isobutyl, sec-butyl, tert-butyl, n-pentyl, isopentyl, neopentyl, n-hexyl, isohexyl, and n-heptyl groups. The cycloalkyl group is preferably a C₃₋₇ cycloalkyl group. Examples include cyclopentyl, cyclohexyl, and cycloheptyl groups. The aryl group is preferably a C₆₋₁₂ aryl group, e.g., including phenyl, tolyl, xylyl, and naphthyl groups. The aralkyl group is preferably a C₇₋₂₀ aralkyl group, e.g., including benzyl, phenethyl, and naphthylmethyl groups.

Specific examples of the vinyl aromatic compound used in the raw material injection step include styrene, p-methylstyrene, and p-tert-butylstyrene, and styrene is preferable. A crude styrene fraction containing 20-50 mass% vinyl aromatic compounds, which is recovered from a naphtha cracking furnace or the like, can be used as a raw material. The vinyl aromatic compound may contain a stabilizing agent such as a polymerization inhibitor.

Dicyclopentadiene used in the raw material injection step is not particularly limited, and high purity dicyclopentadiene containing 30~100 mass% dicyclopentadiene or a crude dicyclopentadiene fraction can be used as a dicyclopentadiene source.

The average residence time of the polymerization raw materials in the raw material injection step is preferably from 5 minutes to 120 minutes, more preferably from 10 minutes to 100 minutes, and still more preferably from 30 minutes to 90 minutes. When the average residence time is 5 minutes or longer, the polymerization reaction can be allowed to proceed to achieve a desired molecular weight. When the average residence time is 120 minutes or shorter, generation of high molecular weight copolymer resins can be prevented. In embodiments of the present invention, the average residence time <min> is, depending on the apparatus used for polymerization and the polymerization conditions, expressed as (amount of initially filled solvent used <g>/injection (ejection) rate of polymerization raw material <g/min>).

The preheating temperature in the raw material injection step is preferably from 180°C to 280°C, and more preferably from 250°C to 270°C. When the preheating temperature is 180°C or higher, production of high molecular weight products formed by polymerization of the vinyl aromatic compound alone and insoluble substances from dicyclopentadiene is likely to be prevented. When the preheating temperature is 280°C or lower, rapid progress of the polymerization reaction can be prevented. The method for preheating is not particularly limited, and examples include preheating in a batch or external circulating manner.

The polymerization raw materials to be injected are set as appropriate according to the desired values of the aromatic content and the molecular weight of the resin to be obtained, and the percentage of the total mass of dicyclopentadiene and a vinyl aromatic compound relative to the total mass of the mixed solution containing dicyclopentadiene, the vinyl aromatic compound, and a solvent to be injected into the reactor is preferably from 35 to 60 mass%, and more preferably from 40 to 50 mass%. The ratio of dicyclopentadiene and a vinyl aromatic compound is preferably from 95 to 190 parts by mass of dicyclopentadiene relative to 100 parts by mass of the vinyl aromatic compound, and more preferably from 130 to 160 parts by mass of dicyclopentadiene. The fractions described above may be used as the dicyclopentadiene and vinyl aromatic compound. When crude fractions are used, unreacted components other than dicyclopentadiene or the vinyl aromatic compound may be used as the polymerization solvent.

In the polymerization reaction, the concentrations of the monomer components when transferred to the next reaction step are required to be kept within specific ranges in order to control the properties of the produced resin within certain ranges. Therefore, the continuous injection of the polymerization raw materials and the ejection of a part of the reaction solution containing the solvent and the polymerization raw materials are required to continue until the concentrations of the reactive components in the reaction system are kept at approximately constant levels. Specifically, the mixed solution containing the solvent and the polymerization raw materials was injected in an amount three to five times or more than the amount of the solvent initially filled for preheating, while a part of the reaction solution is ejected outside the reaction system.

The polymerization solvent can be used at a temperature of the thermal polymerization reaction, and is not particularly limited as long as it does not react with the polymerization raw materials. Preferably, aromatic hydrocarbon compounds other than the vinyl aromatic compounds are used. For example, benzene, toluene, xylene, and ethylbenzene are particularly preferable.

The amount of the initially filled solvent used for preheating is adjusted depending on the desired average residence time. Using the equation described above, average residence time <min> = (amount of initially filled solvent used <g>/injection (ejection) rate of polymerization raw materials (reaction solution) <g/min>), the appropriate amount of the solvent used is set based on the desired average residence time, the injection (ejection) rate of the polymerization raw materials (reaction solution), and the apparatus size.

The reaction pressure in the raw material injection step is not particularly limited, and is preferably from 0 to 10 MPaG, and more preferably from 0.5 to 3 MPaG. The reaction pressure may be a vapor pressure of the injected raw materials at the preheating temperature.

### <Step (B)>

The step (B) is a reaction step. The reaction step is a step of heating the polymerization raw materials to allow for progress of polymerization into a desired molecular weight.

The reaction temperature in the reaction step is preferably from 240°C to 280°C, and more preferably from 250°C to 260°C. When the reaction temperature is from 240°C to 280°C, the rate of polymerization can be controlled into a desired range. Depending on the structure of the reactor, the reaction solution may be transferred from the reactor used in the raw material injection step to another reactor in the reaction step to heat the polymerization raw materials. During the transfer, the reaction solution is desirably transferred without lowering the temperature.

The total concentration of the reactive components in the reaction step, comprising the vinyl aromatic compound and dicyclopentadiene as polymerization raw materials, and the polymerization products of the vinyl aromatic compound and dicyclopentadiene, parts of which partially undergo polymerization in the raw material injection step, relative to the entire reaction solution containing the reactive components and the solvent, is preferably from 35 to 60 mass%, and more preferably from 40 to 50 mass%. When the concentration of the reactive components is 35 mass% or more, the rate of polymerization can be kept within a suitable range. When the concentration is 60 mass% or less, the molecular weight of the obtained copolymer resin can be controlled into a suitable range. To control the concentration of the reactive components into the range described above in the reaction step, the amount of the polymerization raw materials injected and the average residence time in the raw material injection step are set as appropriate.

The reaction time of the reaction step is preferably from 0.5 to 8 hours, and more preferably from 3 to 5 hours.

The reaction pressure in the reaction step is not particularly limited, and is preferably from 0 to 10 MPaG, and more preferably from 0.5 to 3 MPaG. The reaction pressure may be a vapor pressure of the product after the raw material injection step at the reaction temperature.

In the reaction step, the reactions are desirably performed with the temperature maintained in a constant state and the system stirred. The reaction method is not particularly limited, and may be in a batch manner, in an external circulating manner, or by PFR.

The Z-average molecular weight (Mz) of the polymerization reaction product at the point when the polymerization reaction is completed in the reaction step is preferably from 1000 to 4000, and more preferably from 2000 to 3500. When the Z-average molecular weight of the polymerization reaction product is within the range described above, generation of high molecular weight products can be prevented. The point when the polymerization reaction is completed represents the point when heating is performed for a predetermined time period and then is stopped.

### <Step (C)>

The step (C) is a work-up step for purifying the polymerization reaction product obtained in the reaction step. Work-up, such as purification and hydrogenation, may be performed in the work-up step depending on the application of the resin and the performance required for the resin.

Examples of purification include removal of the solvent and light components by evaporation, stripping, or flushing.

The weight average molecular weight (Mw) of the copolymer resin of dicyclopentadiene and a vinyl aromatic compound, which is obtained by purification of the polymerization reaction product is preferably from 500 to 1500, and more preferably from 600 to 1100. The number average molecular weight (Mn) of the copolymer resin is preferably from 300 to 600, and more preferably from 400 to 500. The Z-average molecular weight (Mz) of the copolymer resin is preferably from 500 to 6000, and more preferably from 1000 to 4000. The molecular weight distribution (Mw/Mn) of the copolymer resin is preferably from 1.2 to 5.0, and more preferably from 1.2 to 3.0. When the molecular weight and the molecular weight distribution of the copolymer resin are within the ranges described above, generation of high molecular weight products can be prevented, and furthermore those having desired properties can be obtained.

### EXAMPLES

The present invention will be described in more detail with reference to the examples, but the present invention is not limited thereto in any way. The measurements in the examples below were according to the following methods.

### <Measurement of Molecular Weight>

The molecular weights (weight average molecular weight Mw, number average molecular weight Mn, and Z-average molecular weight Mz) and the molecular weight distribution (Mw/Mn) were determined in terms of polystyrene using a high-speed GPC apparatus (HLC-8220GPC, produced by Tosoh Corporation) (eluent: tetrahydrofuran, column: two G4000HXL, G3000HXL, or G2000HXL produced by Tosoh Corporation were used in tandem connection, detector: RI, standard sample: polystyrene).

### <Measurement of Softening Point>

The softening points were measured by a ring and ball method according to JIS K-2207 (1991).

### <Aromatic Content>

The aromatic contents were calculated from the ¹H-NMR spectrum measurement results using AL-400 (JEOL Ltd.).

### <Example 1>

To an autoclave with an internal volume of 5 L equipped with a stirrer was added 1500 g of xylene as a solvent, and then nitrogen purge in the reaction system was performed. Thereafter, the reaction system was heated to 260°C with stirring at 500 rpm. After heating, while keeping the temperature at 260°C, a mixed solution containing 1775 g of a dicyclopentadiene fraction X1 with the composition shown in Table 1 (dicyclopentadiene concentration: 74 mass%), 933 g of styrene, and 1792 g of xylene was added dropwise at a rate of 50 g/min for continuous injection of the mixed solution at 50 g/min for 90 minutes. Concurrently with the continuous injection of the mixed solution, continuous ejection of the reaction solution outside the reaction system at 50 g/min was performed to control the fluid volume in the reaction system into a constant value (average residence time: 30 minutes) (step (A)). The ejected reaction solution was not used in the next reaction step.

Ninety minutes after the start of the continuous injection of the mixed solution, injection of the mixed solution and ejection of the reaction solution were stopped, and the reaction solution in the reaction system was retained at 260°C for 150 minutes for a polymerization reaction (step (B)). After stopping heating, a polymerization reaction product was obtained. Table 2 shows the properties of the polymerization reaction products. A part of the polymerization reaction product was collected and processed using a rotatory evaporator at 230°C under nitrogen flow for 15 minutes to remove unreacted monomers. Then, the resulting product was processed at 230°C, 6.7 kPaA (A indicates that the pressure is an absolute pressure. The same applies hereinafter.) for 9 minutes to partially remove low molecular weight products and obtain a copolymer resin (step (C)). Table 3 shows the properties of the obtained copolymer resin.

### <Example 2>

The same method as in Example 1 was performed except that the injection rate of the mixed solution and the ejection rate of the reaction solution were changed to 25 g/min, the mixed solution injection time was changed to 180 minutes (average residence time: 60 minutes), the polymerization reaction time was changed to 120 minutes, and the vacuum drying time was changed to 10 minutes. Tables 2 and 3 shows the properties of the obtained polymerization reaction product and copolymer resin.

### <Example 3>

The same method as in Example 1 was performed except that the injection rate of the mixed solution and the ejection rate of the reaction solution were changed to 16.7 g/min, the mixed solution injection time was changed to 270 minutes (average residence time: 90 minutes), the polymerization reaction time was changed to 120 minutes, and the vacuum drying time was changed to 7.5 minutes. Tables 2 and 3 shows the properties of the obtained polymerization reaction product and copolymer resin.

### <Comparative Example 1>

To an autoclave with an internal volume of 5 L equipped with a stirrer was added 2000 g of xylene as a solvent, and then nitrogen purge in the reaction system was performed. Thereafter, the reaction system was heated to 260°C with stirring at 500 rpm. After heating, while keeping the temperature at 260°C, a mixed solution containing 2324 g of a dicyclopentadiene fraction X1 with the composition shown in Table 1 (dicyclopentadiene concentration: 74 mass%), 1245 g of styrene, and 2431 g of xylene was added dropwise at a rate of 12.9 g/min for continuous injection of the mixed solution at 12.9 g/min for 465 minutes (average residence time: 155 minutes). Concurrently with the continuous injection of the mixed solution, continuous ejection of the reaction solution outside the reaction system at 12.9 g/min was performed to control the fluid volume in the reaction system into a constant value. Table 2 shows the properties of the polymerization reaction product in the autoclave after injection of the polymerization raw materials. A part of the polymerization reaction product was collected and processed using a rotatory evaporator at 230°C under nitrogen flow for 15 minutes to remove unreacted monomers. Then, the resulting product was processed at 230°C, 6.7 kPaA for 15 minutes to partially remove low molecular weight products and obtain a copolymer resin. Table 3 shows the properties of the obtained copolymer resin.

### <Comparative Example 2>

The same method as in Comparative Example 1 was performed except that the injection rate of the mixed solution and the ejection rate of the reaction solution were changed to 11.1 g/min, the average residence time was changed to 180 minutes, and the vacuum drying time was changed to 12.5 minutes. Tables 2 and 3 shows the properties of the obtained polymerization reaction product and copolymer resin.

### <Comparative Example 3>

A plug flow reactor was replaced with xylene and heated to 260°C. After heating, a mixed solution containing 866 g of a dicyclopentadiene fraction X1 (dicyclopentadiene concentration: 74 mass%), 456 g of styrene, and 875 g of xylene at room temperature was injected at a rate of 11.8 g/min. The mixed solution was heated from room temperature to 150°C in 7 minutes, and then from 150°C to 260°C at a heating rate of 15.7°C/min and a heating time of 7 minutes. Continuous injection of the mixed solution and continuous ejection were performed for 42 minutes. Table 2 shows the properties of the obtained polymerization reaction product.

### <Comparative Example 4>

The same method as in Comparative Example 3 was performed except that the injection rate of the mixed solution and the ejection rate of the reaction solution were changed to 11.8 g/min, the heating time from room temperature to 150°C was 7 minutes and the heating time from 150°C to 260°C was changed to 14 minutes, the heating rate was changed to 7.9°C/min, and the time period of continuous injection of the mixed solution and continuous ejection was changed to 63 minutes. Table 2 shows the properties of the obtained polymerization reaction product.

### <Comparative Example 5>

The same method as in Comparative Example 3 was performed except that the injection rate of the mixed solution and the ejection rate of the reaction solution were changed to 23.6 g/min, the heating time from room temperature to 150°C was changed to 3.5 minutes and the heating time from 150°C to 260°C was changed to 4.3 minutes, the heating rate was changed to 25.6 °C/min, and the time period of continuous injection of the mixed solution and continuous ejection was changed to 24 minutes. Table 2 shows the properties of the obtained polymerization reaction product.

### <Comparative Example 6>

To an autoclave with an internal volume of 5 L equipped with a stirrer was added a mixed solution containing 1104 g of a dicyclopentadiene fraction X1 (dicyclopentadiene concentration: 74 mass%), 581 g of styrene, and 1115 g of xylene at a normal temperature, and the mixed solution was heated to 260°C at a heating rate of 2°C/min. After heating, the mixed solution was retained at 260°C for 180 minutes for a polymerization reaction. Table 2 shows the properties of the obtained polymerization reaction product.

### <Comparative Example 7>

The same method as in Comparative Example 6 was performed except that the heating rate was changed to 4 °C/min, and the retention time was changed to 210 minutes. Table 2 shows the properties of the obtained polymerization reaction product.

**[Table 1]**

| Composition (mass%) | Dicyclopentadiene fraction X1 |
|---|---|
| Dicyclopentadiene | 74 |
| C5, C6 paraffin | 12 |
| C5, C6 olefin | 2 |
| C10+^{∗} | 7 |
| Others | 5 |
| Total | 100 |

| | |
|---|---|
| ^{∗}: Paraffins and olefins with a carbon number of 10 or more. | |

**[Table 2]**

| | Ex. 1 | Ex. 2 | Ex. 3 | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|---|---|
| Mn | 160 | 151 | 167 | 148 | 154 | 106 | 108 | 105 | 179 | 186 |
| Mz | 3012 | 2760 | 2645 | 2670 | 2588 | 12763 | 12084 | 10471 | 6860 | 9880 |
| Mw /Mn | 2.89 | 2.78 | 3.04 | 2.86 | 2.97 | 2.49 | 3.24 | 2.06 | 4.29 | 5.08 |

**[Table 3]**

| | Ex. 1 | Ex. 2 | Ex. 3 | Com. Ex. 1 | Com. Ex. 2 |
|---|---|---|---|---|---|
| Softening point (°C) | 87 | 84 | 86 | 86 | 86 |
| Yield after drying (%) | 39.7 | 39.3 | 40.0 | 30.5 | 32.6 |
| Aromatic content (%) | 21.9 | 21.7 | 21.7 | 22.1 | 21.9 |
| Mn | 423 | 419 | 421 | 416 | 421 |
| Mz | 1834 | 1908 | 1935 | 1822 | 1905 |
| Mw/Mn | 2.11 | 2.15 | 2.15 | 2.13 | 2.16 |

As shown in Table 2, the Z-average molecular weights of the polymerization reaction products at the point when the polymerization reactions were completed were from 1000 to 4000, meaning that generation of high molecular weight products was prevented. In addition, as shown in Table 3, the copolymer resins obtained in Examples 1 to 3 had Z-average molecular weights (Mz) of from 1000 to 3000, meaning that generation of high molecular weight products was prevented, and furthermore the yields after drying were about 40%. Comparative Examples 1 and 2 were the cases where only the raw material injection step was carried out with the reaction step omitted. In these cases, generation of high molecular weight copolymer resins was successfully prevented, but many unreacted components remained, and the yields after drying were about 30%, resulting in lowered yields as compared with Examples. Comparative Examples 3 to 7 were the cases where the raw material injection step was omitted. In these cases, it was demonstrated that copolymer resins with higher molecular weights were produced.

From Examples and Comparative Examples described above, it was demonstrated that inclusion of the raw material injection step in which the polymerization raw materials were rapidly heated by sensible heat and the reaction step in which the polymerization raw materials made a polymerization into a desired molecular weight could prevent generation of high molecular weight copolymer resins and improve the yields of the copolymer resins.

## Claims

1. A method of manufacturing a copolymer resin by thermal polymerization of dicyclopentadiene and a vinyl aromatic compound,
wherein the vinyl aromatic compound is a compound represented by the following formula (1): 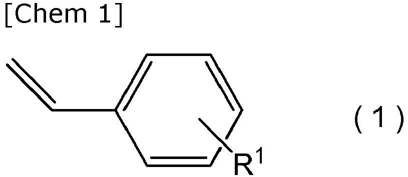
wherein R¹ is a hydrogen atom, an alkyl group, a cycloalkyl group, an aryl group, or an aralkyl group;
the method comprising the following steps (A) and (B):
(A) a raw material injection step comprising continuously injecting the dicyclopentadiene and the vinyl aromatic compound represented by the above formula (1) as polymerization raw materials into a preheated solvent in the reaction system, and concurrently ejecting a part of the reaction solution containing the solvent and the polymerization raw materials outside the reaction system, while raising the temperature of the polymerization raw materials; and
(B) a reaction step comprising heating the polymerization raw materials at a temperature ranging from 240°C to 280°C in the reaction system after the raw material injection step to proceed the polymerization reaction and obtain a polymerization reaction product.

2. The manufacturing method according to claim 1, wherein the average residence time of the polymerization raw materials in the step (A) is from 5 minutes to 120 minutes.

3. The manufacturing method according to claim 1 or 2, wherein the preheating temperature of the solvent in the step (A) is in a range from 180°C to 280°C.

4. The manufacturing method according to any one of claims 1 to 3, wherein the total concentration of reactive components in the step (B), comprising the vinyl aromatic compound and the dicyclopentadiene as polymerization raw materials, and a polymerization product from the vinyl aromatic compound and the dicyclopentadiene, based on the entire reaction solution comprising the reactive components and the solvent, is in a range from 35 mass% to 60 mass%.

5. The manufacturing method according to any one of claims 1 to 4, wherein the Z-average molecular weight of the polymerization reaction product obtained in the step (B) is from 1000 to 4000.

6. The manufacturing method according to any one of claims 1 to 5, wherein a polymerization solvent is an aromatic hydrocarbon compound.

7. The manufacturing method according to any one of claims 1 to 6, further comprising
(C) a work-up step of purifying the polymerization reaction product after the reaction step.

8. The manufacturing method according to claim 7, wherein the Z-average molecular weight of the copolymer resin obtained in the step (C) is from 1000 to 3000.
